(19) Europäisches Patentamt
European Patent Office
Office européen des brevets

(11) EP 4 368 591 A1

(12) EUROPEAN PATENT APPLICATION
published in accordance with Art. 153(4) EPC

(43) Date of publication:
**15.05.2024 Bulletin 2024/20**

(21) Application number: **22860950.9**

(22) Date of filing: **22.06.2022**

(51) International Patent Classification (IPC):
***C03C 12/00*** (2006.01) ***C03C 10/14*** (2006.01)

(52) Cooperative Patent Classification (CPC):
**C03C 10/00; C03C 12/00**

(86) International application number:
**PCT/JP2022/024858**

(87) International publication number:
**WO 2023/026656 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2021 JP 2021135561**

(71) Applicant: **Denka Company Limited**
**Tokyo 103-8338 (JP)**

(72) Inventors:
- **KARIYA, Kohei**
  **Tokyo 103-8338 (JP)**
- **EBISUZAKI, Takako**
  **Tokyo 103-8338 (JP)**
- **FUKAZAWA, Motoharu**
  **Tokyo 103-8338 (JP)**

(74) Representative: **Isarpatent**
**Patent- und Rechtsanwälte**
**Barth Hassa Peckmann & Partner mbB**
**Friedrichstraße 31**
**80801 München (DE)**

# (54) POWDER

(57) [Summary] One embodiment of the present invention provides a powder. The powder includes ZnO, Al2O3, and SiO2 as components. In a ternary phase diagram of the ZnO, the Al2O3, and the SiO2, the powder has a composition included in a rectangular area having as the four corners thereof (ZnO (mol%), Al2O3 (mol%), SiO2 (mol%)) = (24, 13, 63), (19, 18, 63), (37, 12, 51), (32, 17, 51). The ratio (S001/S101) of the area S001 of a peak appearing in the range of 15° ≤ 20 ≤ 17° and the area $S_{101}$ of a peak appearing in the range of 24° ≤ 20 ≤ 27° in an X-ray diffraction pattern is 0.001-0.07.

FIG. 1

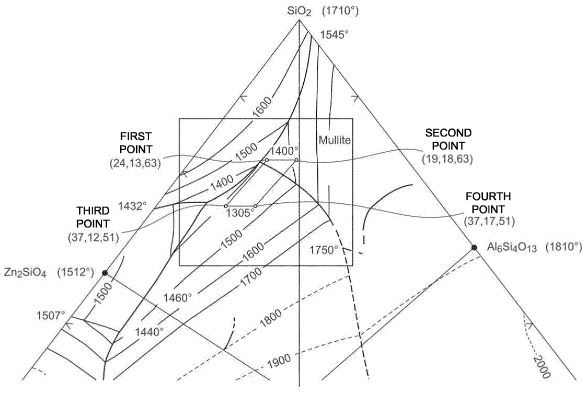


EP 4 368 591 A1

## Description

## BACKGROUND

The present invention relates to a powder.

RELATED ART

Fillers in a powder form are generally used to improve physical properties or functions of base materials such as glass materials and resin materials. For example, amorphous silica has a small thermal expansion coefficient of about $0.5\times10^{-6}$/°C and is relatively readily available, and therefore amorphous silica is used as a filler to control a thermal expansion coefficient of a base material. Fillers having thermal expansion coefficients even lower than that of amorphous silica are attracting attention in order that, when a filler is added to base materials used for bonding, sealing, encapsulation, or the like, the thermal expansion coefficients match between the filler and the base material and that thermal stress is hindered from occurring.
As a material having a thermal expansion coefficient lower than that of amorphous silica, many materials are known, such as zirconium phosphate, zirconium tungstate, and manganese nitride. However, the above materials are not commonly used in electronic components, etc. because specific gravities of these materials are large, making the resin materials, etc. to which these materials are added also heavy. Therefore, development of light materials having a low thermal expansion coefficient has been actively pursued.
For example, Patent Document 1 discloses a powder comprising three components of ZnO, $Al_2O_3$, and $SiO_2$, wherein the respective contents of the three components are ZnO: 17 to 43 mol%, $Al_2O_3$: 9 to 20 mol%, and $SiO_2$: 48 to 63 mol% of the total content of the three components, the powder being excellent in an effect of reducing a thermal expansion coefficient of a base material when blended in a resin base material.

PRIOR ART DOCUMENTS

Patent document

[Patent Document 1] PCT International Application, Publication No. 2019/177112

## SUMMARY

Problems to be Solved by Invention

Here, in the above-mentioned Patent Document 1, the thermal expansion coefficient of the resin composition to which the powder is added is evaluated, but the thermal expansion coefficient of the powder itself is not evaluated. On the other hand, with the recent size reduction of electronic components, there is a need for powders with negative thermal expansion coefficients greater in magnitude.
The purpose of the present invention is to provide a powder having a negative thermal expansion coefficient greater in magnitude.

Means for Solving Problems

According to one aspect of the present invention, a powder is provided. The powder comprises constituents including ZnO, $Al_2O_3$, and $SiO_2$. In a ternary state diagram of ZnO, $Al_2O_3$, and $SiO_2$, the powder has a composition included in a quadrangular area having, as corners, four points (ZnO (mol%), $Al_2O_3$ (mol%), $SiO_2$ (mol%)) = (24,13,63), (19,18,63), (37,12,51), (32,17,51), and in an X-ray diffraction pattern, a ratio ($S_{001}/S_{101}$) of an area $S_{001}$ of a peak appearing in a range of $15°\leq2\theta\leq17°$ to an area $S_{101}$ of a peak appearing in a range of $24°\leq2\theta\leq27°$ is in a range from 0.001 to 0.07.
The present invention may be provided in each of the following aspects.
The powder comprising a $\beta$-quartz solid solution as a crystalline phase at equal to or more than 50 mass% of a total amount of the powder.
The powder wherein, each of total contents of Li, Na, and K is equal to or less than 500 mass ppm of a total amount of the powder.
The powder, wherein an average circularity is equal to or more than 0.6.
Of course, the present invention is not limited to these.

Effect of the Invention

According to the present invention, it is possible to provide a powder having a negative thermal expansion coefficient of greater in magnitude.

## BRIEF DESCRIPTION OF DRAWINGS

FIG. 1 illustrates a quadrangular area in a ternary state diagram of ZnO, $Al_2O_3$ and $SiO_2$.
FIG. 2 is an enlarged view of an area around the quadrangular area in the ternary state diagram of ZnO, $Al_2O_3$ and $SiO_2$.
FIG. 3 represent X-ray diffraction patterns of powder samples of Examples 1-5 and Comparative Example 1.
FIG. 4 is a plot diagram of thermal expansion coefficient in a (112) plane direction to ratio of $S_{001}/S_{101}$.
FIG. 5 is a plot diagram of thermal expansion coefficient in a (203) plane direction to ratio of $S_{001}/S_{101}$.

## DETAILED DESCRIPTION

Hereinafter, a description will be given of embodiments of the present invention. The present invention is not limited to the following embodiments, and the respective components described in the following embodiments can be combined with each other.

POWDER

The powder according to the present embodiment comprises constituents including ZnO, $Al_2O_3$, and $SiO_2$. In a ternary state diagram of ZnO, $Al_2O_3$ and $SiO_2$, the powder has a composition included in a quadrangular area having, as corners, four points (ZnO (mol%), $Al_2O_3$ (mol%), $SiO_2$ (mol%)) = (24, 13, 63), (19, 18, 63), (37, 12, 51), (32, 17, 51), and in an X-ray diffraction pattern, a ratio ($S_{001}/S_{101}$) of an area $S_{001}$ of a peak appearing in a range of $15° \leq 2\theta \leq 17°$ to an area $S_{101}$ of a peak appearing in a range of $24° \leq 2\theta \leq 27°$ is in a range from 0.001 to 0.07.

In the powder having the composition range described above, the ratio $S_{001}/S_{101}$ and the thermal expansion coefficient of the powder have relationship of a linear function with a negative slope, and when $S_{001}/S_{101}$ is in a range from 0.001 to 0.07, the thermal expansion coefficient is greater in magnitude. In other words, if the powder has the composition described above and illustrates the X-ray diffraction pattern described above, the negative thermal expansion coefficient is greater in magnitude.

Although the present invention is not limited to any particular theories or mechanisms, and the actual mechanism thereof has not been clarified, the applicant considers that the reasons are as described below why the negative thermal expansion coefficient becomes greater in magnitude when the powder has the above-mentioned composition and represent the above-mentioned X-ray diffraction pattern. Firstly, in such a range, a content of a β-quartz solid solution having a negative thermal expansion coefficient greater in magnitude increases, and thereby the powder as a whole is likely to have a negative thermal expansion coefficient greater in magnitude. Second, it is considered that the greater unevenness of existence likelihood among interstitial sites where Zn substitutes in interstitial-type β-quartz crystal structures, the larger the area $S_{001}$ of the peak appearing in the range of $15° \leq 2\theta \leq 17°$ in the X-ray diffraction pattern. In other words, the ratio $S_{001}/S_{101}$ acquired by dividing the area $S_{001}$ by the area $S_{101}$ of the peak appearing in the range of $24° \leq 2\theta \leq 27°$ is in a range from 0.001 to 0.07, which means that the unevenness of the existence likelihood among the interstitial sites is constant. Such β-quartz solid solution has a negative thermal expansion coefficient greater in magnitude.

Hereinafter, the points (24, 13, 63), (19, 18, 63), (37, 12, 51), and (32, 17, 51) will be also referred to as "first point," "second point," "third point," and "fourth point", respectively.

FIG. 1 illustrates the quadrangular area in the ternary state diagram of ZnO, $Al_2O_3$ and $SiO_2$. FIG. 2 is an enlarged view of an area around the quadrangular area in the ternary state diagram of ZnO, $Al_2O_3$ and $SiO_2$.

The first point is (24,13,63) as described above but may be, for example, (25,13,62), (24,14,62), or (25,14,61).

The second point is (19, 18, 63) as described above but may be, for example, (20, 17, 63), (21, 17, 62), (22, 17, 16), (23, 17, 60), or (24, 16, 60).

The third point is (37,12,51) as described above but may be, for example, (36,13,51), (35,13,52), (34,13,53), (33,13,54), (32,13,55), (31,13,56), (30,13,57), or (29,14,57).

The fourth point is (32, 17, 51) as described above but may be, for example, (31, 17, 52), (30, 17, 53), (29, 17, 54), (28, 17, 55), (27, 17, 56), or (26, 17, 57).

In the X-ray diffraction pattern of the powder, the ratio ($S_{001}/S_{101}$) of the area $S_{001}$ of the peak appearing in the range of $15° \leq 2\theta \leq 17°$ to the area $S_{101}$ of the peak appearing in the range of $24° \leq 2\theta \leq 27°$ is not limited as long as the ratio

($S_{001}/S_{101}$) is in a range from 0.001 and 0.07, and may be, for example, equal to or less than 0.065, equal to or less than 0.06, equal to or less than 0.055, equal to or less than 0.05, equal to or less than 0.045, equal to or less than 0.04, equal to or less than 0.39, equal to or less than 0.38, equal to or less than 0.37, equal to or less than 0.36, equal to or less than 0.35, equal to or less than 0.34, equal to or less than 0.33, equal to or less than 0.32, equal to or less than 0.31, or equal to or less than 0.3. $S_{001}/S_{101}$ may be equal to or more than 0.002, equal to or more than 0.003, equal to or more than 0.004, equal to or more than 0.005, equal to or more than 0.006, equal to or more than 0.007, equal to or more than 0.008, equal to or more than 0.009, or equal to or more than 0.01. The negative thermal expansion coefficient of the powder can be made large in magnitude when $S_{001}/S_{101}$ is within the predetermined range. The area of each peak is obtained with Jade 9, a powder X-ray diffraction pattern comprehensive analysis software from Materials Data, Inc., by drawing a parabolic background line in a range of $10° \leq 2\theta \leq 30°$ and then conducting a refinement including the background line and separating the peaks. The peak is separated in consideration of overlaps between each of the peaks in the ranges of $15° \leq 2\theta \leq 17°$ and $24° \leq 2\theta \leq 27°$ and a $K\alpha 1$-derived diffraction line and between each peak and a $K\alpha 2$-derived diffraction line. In the analysis, the pseudo-voigt function is used as a function of the diffraction peaks.

The powder may contain ionic impurities, which are unavoidable impurities, and the content thereof is not particularly limited. The total content of Li, Na, and K as ionic impurities may be, for example, equal to or less than 500 mass ppm, equal to or less than 450 mass ppm, equal to or less than 400 mass ppm, equal to or less than 350 mass ppm, equal to or less than 300 mass ppm, equal to or less than 250 mass ppm, equal to or less than 200 mass ppm, equal to or less than 150 mass ppm, equal to or less than 100 mass ppm, equal to or less than 90 mass ppm, equal to or less than 80 mass ppm, equal to or less than 70 mass ppm, equal to or less than 60 mass ppm, equal to or less than 50 mass ppm, equal to or less than 40 mass ppm, equal to or less than 30 mass ppm, equal to or less than 20 mass ppm, or equal to or less than 10 mass ppm of the total amount of the powder. When the total content of Li, Na, and K is equal to or less than the predetermined amount, it is possible to improve moisture-resistance reliability and to reduce failures of electronic apparatuses. It is to be noted that the total content of Li, Na, and K may be more than 500 mass ppm of the total amount of the powder. On the other hand, the content of Li may be equal to or more than 0 mass ppm (including an aspect where the total content of Li, Na, and K is 0 mass ppm, i.e., Li, Na, and K is not included at all) of the total amount of the powder.

The content of Li is not limited, but may be, for example, equal to or less than 500 mass ppm, equal to or less than 450 mass ppm, equal to or less than 400 mass ppm, equal to or less than 350 mass ppm, equal to or less than 300 mass ppm, equal to or less than 250 mass ppm, equal to or less than 200 mass ppm, equal to or less than 150 mass ppm, equal to or less than 100 mass ppm, equal to or less than 90 mass ppm, equal to or less than 80 mass ppm, equal to or less than 70 mass ppm, equal to or less than 60 mass ppm, equal to or less than 50 mass ppm, equal to or less than 40 mass ppm, equal to or less than 30 mass ppm, equal to or less than 20 mass ppm, or equal to or less than 10 mass ppm of the total amount of the powder. On the other hand, the content of Li may be equal to or more than 0 mass ppm (including an aspect where the content of Li is 0 mass ppm, i.e., Li is not included at all) of the total amount of the powder.

The content of Na is not limited, but for example, equal to or less than 500 mass ppm, equal to or less than 450 mass ppm, equal to or less than 400 mass ppm, equal to or less than 350 mass ppm, equal to or less than 300 mass ppm, equal to or less than 250 mass ppm, equal to or less than 200 mass ppm, equal to or less than 150 mass ppm, equal to or less than 100 mass ppm, equal to or less than 90 mass ppm, equal to or less than 80 mass ppm, equal to or less than 70 mass ppm, equal to or less than 60 mass ppm, equal to or less than 50 mass ppm, equal to or less than 40 mass ppm, equal to or less than 30 mass ppm, equal to or less than 20 mass ppm, or equal to or less than 10 mass ppm of the total amount of the powder. On the other hand, the content of Na may be equal to or more than 0 mass ppm (including an aspect where the content of Na is 0 mass ppm, i.e., Na is not included at all) of the total amount of the powder.

The content of K is not limited, but may be, for example, equal to or less than 500 mass ppm, equal to or less than 450 mass ppm, equal to or less than 400 mass ppm, equal to or less than 350 mass ppm, equal to or less than 300 mass ppm, equal to or less than 250 mass ppm, equal to or less than 200 mass ppm, equal to or less than 150 mass ppm, equal to or less than 100 mass ppm, equal to or less than 90 mass ppm, equal to or less than 80 mass ppm, equal to or less than 70 mass ppm, equal to or less than 60 mass ppm, equal to or less than 50 mass ppm, equal to or less than 40 mass ppm, equal to or less than 30 mass ppm, equal to or less than 20 mass ppm, or equal to or less than 10 mass ppm of the total amount of the powder. On the other hand, the content of K may be equal to or more than 0 mass ppm (including an aspect where the content of K is 0 mass ppm, i.e., K is not included at all) of the total amount of the powder.

The powder can further contain zirconium oxide ($ZrO_2$), titanium oxide ($TiO_2$), etc. as well as ZnO, $Al_2O_3$ and $SiO_2$. The total content of ZnO, $Al_2O_3$ and $SiO_2$ is not particularly limited, but may be, for example, equal to or more than 90 mol%, equal to or more than 91 mol%, equal to or more than 92 mol%, equal to or more than 93 mol%, equal to or more than 94 mol%, equal to or more than 95 mol%, equal to or more than 96 mol%, equal to or more than 97 mol%, equal to or more than 98 mol%, equal to or more than 99 mol%, equal to or more than 99.5 mol%, equal to or more than 99.9 mol%, equal to or more than 99.95 mol%, and equal to or more than 99.99 mol% of the total amount of the powder. The powder may consist only of ZnO, $Al_2O_3$ and $SiO_2$ and unavoidable impurities or may consist only of ZnO, $Al_2O_3$, and $SiO_2$. When the total content of ZnO, $Al_2O_3$, and $SiO_2$ is equal to or more than the predetermined amount, the negative thermal expansion coefficient of the powder can be made greater in magnitude. On the other hand, the total content of ZnO, $Al_2O_3$, and $SiO_2$ may be equal to or less than 100 mol% of the total amount of the powder.

The powder may contain a β-quartz solid solution as a crystalline phase. A content of the β-quartz solid solution is not particularly limited but may be, for example, equal to or more than 50 mass%, equal to or more than 55 mass%, equal to or more than 57 mass%, equal to or more than 60 mass%, equal to or more than 62 mass%, equal to or more than 65 mass%, equal to or more than 67 mass%, equal to or more than 70 mass%, equal to or more than 71 mass%, equal to or more than 72 mass%, equal to or more than 73 mass%, equal to or more than 74 mass%, equal to or more than 75 mass%, or equal to or more than 76 mass% of the total amount of the powder. When the content of the β-quartz solid solution is equal to or more than the predetermined amount, the negative thermal expansion coefficient of the powder can be increased in magnitude. In addition, when the content of the β-quartz solid solution is equal to or more than the predetermined amount, the amount can be increased of the powder blended (filled) in the base material, and thereby the thermal expansion coefficient of the base material can be more easily controlled. On the other hand, the content of the β-quartz solid solution may be equal to or less than 100 mass%. The structure of the β-quartz solid solution included in the powder can be expressed as $xZnO\text{-}yAl_2O_3\text{-}zSiO_2$. Identification of the crystalline phase and measurement of the content can be carried out by analyzing the XRD pattern obtained by the powder X-ray diffraction method using the Rietveld method.

In addition to the β-quartz solid solution phase, the powder may contain another amorphous phase and may contain another crystalline phase. The powder may contain a willemite phase ($Zn_2SiO_4$) as the other crystalline phase. The powder may also contain a gahnite phase ($ZnAl_2O_4$), mullite phase ($Al_6Si_2O_{13}$), and cristobalite phase ($SiO_2$) as the other crystalline phase. The total content of the gahnite phase ($ZnAl_2O_4$), mullite phase ($Al_6Si_2O_{13}$), and cristobalite phase ($SiO_2$) is not limited but may be, for example, equal to or less than 10 mass%, equal to or less than 9 mass%, equal to or less than 8 mass%, equal to or less than 7 mass%, equal to or less than 6 mass%, equal to or less than 5 mass%, equal to or less than 4 mass%, equal to or less than 3 mass%, equal to or less than 2 mass%, equal to or less than 1 mass%, equal to or less than 0.5 mass%, equal to or less than 0.2 mass%, equal to or less than 0.1 mass%, equal to or less than 0.05 mass%, equal to or less than 0.02 mass%, or equal to or less than 0.01 mass% of the total amount of the powder. The gahnite phase ($ZnAl_2O_4$), mullite phase ($Al_6Si_2O_{13}$), and cristobalite phase ($SiO_2$) have positive thermal expansion coefficients, and thus when the content thereof is equal to or less than the predetermined amount, the negative thermal expansion coefficient of the powder can remain large in magnitude. On the other hand, the total content of gahnite phase ($ZnAl_2O_4$), mullite phase ($Al_6Si_2O_{13}$), and cristobalite phase ($SiO_2$) may be equal to or more than 0 mass% (including an aspect where the content of these crystalline phases is 0 mass%, i.e., these crystalline phases are not included at all) of the total amount of the powder.

The shape of the powder is not limited and can be spherical, cylindrical, prismatic, etc., but spherical shape is preferable.

Whether or not the powder is spherical can be determined by calculating an average circularity of the powder. In the present specification, the average circularity is calculated as described below. A circularity is calculated by substituting, into the following equation (1), a projected area (S) and projected perimeter (L) of a particle (powder particle) whose image is captured by using an electron microscope and is used to obtain the projected area (S) and perimeter (L). The average circularity is then obtained by calculating an average value of circularities of 100 randomly selected particles.

$$\text{Circularity} = 4\pi S/L^2 \quad (1)$$

The average circularity is not limited but may be, for example, equal to or more than 0.6, equal to or more than 0.65, equal to or more than 0.7, equal to or more than 0.75, equal to or more than 0.8, equal to or more than 0.85, or equal to or more than 0.9. When the average circularity is equal to or more than the predetermined amount, it is possible to reduce rolling resistance of the particles at the time of mixing those with the base material, which lowers viscosity of the base material and improves fluidity of the base material. In particular, when the average circularity is equal to or more than 0.90, the fluidity of the base material becomes even higher, allowing the powder to be highly filled into the base material and facilitating the reduction of the thermal expansion coefficient. On the other hand, the average circularity may be equal to or less than 1.

The average particle diameter is not particularly limited but may be, for example, equal to or more than 0.1 μm, equal to or more than 0.2 μm, equal to or more than 0.5 μm, equal to or more than 1 μm, or equal to or more than 2 μm. On the other hand, the average particle diameter may be equal to or less than 100 μm, equal to or less than 90 μm, equal to or less than 80 μm, equal to or less than 70 μm, equal to or less than 60 μm, or equal to or less than 50

μm. The average particle diameter of the powder can be obtained by measuring a particle size distribution using a laser diffraction particle size analyzer, multiplying the calculated particle diameter value by a relative particle amount (differential vol%), and dividing it by a total relative particle amount (100 vol%).

The thermal expansion coefficient in a 112 plane direction of the powder is not limited but may be equal to or less than 0 ppm/°C, equal to or less than -0.1 ppm/°C, equal to or less than -0.2 ppm/°C, equal to or less than -0.3 ppm/°C, equal to or less than -0.4 ppm/°C, equal to or less than -0.5 ppm/°C, equal to or less than -0.6 ppm/°C, equal to or less than -0.7 ppm/°C, equal to or less than-0.8 ppm/°C, equal to or less than -0.9 ppm/°C, equal to or less than -1 ppm/°C, equal to or less than -1.1 ppm/°C, equal to or less than -1.2 ppm/°C, equal to or less than -1.3 ppm/°C, equal to or less than -1.4 ppm/°C, or equal to or less than -1.5 ppm/°C. The larger in magnitude the negative thermal expansion coefficient of the powder, the lower the amount of powder added may be. Therefore, it is preferable that the negative thermal expansion coefficient is large in magnitude. Thus, the lower limit value of the thermal expansion coefficient in the 112 plane direction of the powder is not particularly limited. A thermal expansion coefficient in a plane direction is measured by the following method. High-temperature X-ray diffraction (high-temperature XRD) is used to analyze a thermal expansion coefficient of a main phase. Here, an angle standard sample (Si) is added to the sample and the measurement is carried out using a focusing optical system. Specifically, about 10 mass% of the angle standard sample (Si, NIST SRM 640c) is added to each sample, and then each sample is mixed in a mortar. Thereafter, the sample is placed on a sample plate and is pressed and spread by a glass plate so that the sample surface and the sample plate surface are aligned, and measurements (using a focusing optical system) are carried out at six temperature levels (25 to 300°C). Lattice plane spacing at each temperature is calculated based on the obtained diffraction lines derived from the 112 plane and the 203 plane, and the thermal expansion coefficient of the main phase is analyzed. More detailed measurement conditions are described in the Examples.

The thermal expansion coefficient in the 203 plane direction is not limited, but may be equal to or less than 0 ppm/°C, equal to or less than -0.1 ppm/°C, equal to or less than -0.2 ppm/°C, equal to or less than -0.3 ppm/°C, equal to or less than -0.4ppm/°C, equal to or less than -0.5 ppm/°C or less, equal to or less than -0.6 ppm/°C, equal to or less than -0.7 ppm/°C, equal to or less than -0.8 ppm/°C, equal to or less than -0.9 ppm/°C, equal to or less than -1 ppm/°C, equal to or less than -1.1 ppm/°C, equal to or less than -1.2 ppm/°C, equal to or less than -1.3 ppm/°C, equal to or less than -1.4 ppm/°C, or equal to or less than -1.5 ppm/°C. The lower limit value of the thermal expansion coefficient of the powder in the 203 plane direction is not particularly limited.

## METHOD FOR PRODUCING POWDER

Hereinafter, a description will be given of a method for producing the powder according to the present embodiment. The method for producing the powder according to one embodiment includes preparing a raw material powder (raw material powder preparation step), forming the raw material powder into a spherical shape (sphere formation step), and crystallizing the raw material powder (crystallization step). The method for producing the powder according to the present embodiment may include the raw material powder preparation step, the sphere formation step, and the crystallization step in this order.

### Raw Material Powder Preparation Step

In the raw material powder preparation step, raw materials are mixed to prepare the raw material powder. Although not limited, the raw materials may include zinc oxide, etc. as a Zn source, aluminum oxide, aluminum hydroxide, etc. as an Al source, and silicon oxide (α-quartz, cristobalite, amorphous silica, etc.) as a Si source.

The contents of the raw materials are not limited but may be such that, for example, the Zn source is 17 to 43 mol%, Al source is 9 to 20 mol%, and Si source is 48 to 63 mol% of the total amount of Zn, Al, and Si source materials to be used.

In addition to the raw materials mentioned above, the raw material powder preparation step may add zirconium oxide, titanium oxide, or other nucleating agents to an extent that they do not affect the thermal expansion coefficient.

The content of ionic impurities in the raw material mixture is not limited but may be equal to or less than 500 mass ppm, equal to or less than 450 mass ppm, equal to or less than 400 mass ppm, equal to or less than 350 mass ppm, equal to or less than 300 mass ppm, equal to or less than 250 mass ppm, equal to or less than 200 mass ppm, equal to or less than 150 mass ppm, equal to or less than 100 mass ppm, equal to or less than 0 mass ppm, equal to or less than 80 mass ppm, equal to or less than 70 mass ppm, equal to or less than 60 mass ppm, equal to or less than 50 mass ppm, equal to or less than 40 mass ppm, equal to or less than 30 mass ppm, equal to or less than 20 mass ppm, or equal to or less than 10 mass ppm.

The method of mixing the raw material oxides is not limited as long as the method hinders alkali metals, such as Na, Li, or K, and other metal elements, such as Fe, from mixing in. For example, mixing can be carried out using an agate mortar, ball mill, vibration mill, or other milling machine, or various mixers.

In the raw material powder preparation step, the raw material powder is then placed in a container, such as a platinum crucible or alumina crucible, and melted in an electric furnace, high-frequency furnace, image furnace, or other heating furnace or flame burner, etc., and then these melts are brought out into air or water for rapid cooling. In this way, raw material glass can be obtained. The obtained raw material glass is then pulverized to obtain the raw material powder. The method of pulverizing the raw material glass is not limited but may be, for example, a method using an agate mortar, a ball mill, a vibration mill, a jet mill, a wet jet mill, etc. Pulverizing can be carried out by any of dry and wet pulverizing methods. When pulverizing is carried out by a wet pulverizing method, a liquid such as water or alcohol for example is mixed with the raw material powder and thereby pulverizing can be carried out in a wet condition.

Sphere Formation Step

In the sphere formation step, the raw material powder is made to have a spherical shape by a powder melting method. The sphere formation method of the powder melting method includes feeding and melting the raw material powder in a chemical flame, thermal plasma, vertical tube furnace, or tower kiln, and making the powder to have a spherical shape by its own surface tension.

In the powder melting method, the particle size distribution after the sphere formation can be adjusted by forming, to have a desired particle size distribution, particles made by pulverizing raw material glass or made by granulating raw material powder with a spray dryer, etc. The sphere formation is carried out by feeding and melting these particles in a chemical flame, thermal plasma, vertical tube furnace, tower kiln, etc. while suppressing particle agglomeration. Alternatively, the sphere formation may be carried out by preparing a dispersion liquid of the raw material powder dispersed in a solvent or the like, spraying the liquid raw material into a chemical flame, thermal plasma, vertical tube furnace, tower kiln, etc. using a nozzle or the like, and melting the raw material powder while evaporating the dispersion medium.

In the powder melting method, "chemical flame" refers to a flame generated by combustion of a combustible gas with a burner. The combustible gas may be any gas as long as temperature can rise to equal to or more than the melting point of the low material powder, and may include, for example, natural gas, propane gas, acetylene gas, liquefied petroleum gas (LPG), hydrogen, etc. Such a combustible gas may be used together with oxidizing gases such as air, oxygen, etc. The size, temperature, and other conditions of the chemical flame can be adjusted by the size of the burner and the flow rates of the combustible and oxidizing gases.

Crystallization Step

In the crystallization step, the raw material powder is heated at high temperature to be crystallized. Any heating apparatus can be used for crystallization as long as a desired heating temperature can be provided. For example, an electric furnace, rotary kiln, pusher furnace, roller hearth kiln, etc. can be used.

The temperature in the heating crystallization (crystallization temperature) is not particularly limited but may be, for example, 750 to 900°C. When the heating temperature is equal to or more than the predetermined temperature, it is possible to shorten a crystallization time and to increase the content of the β-quartz solid solution phase due to sufficient crystallization. Thereby, it is possible to further lower the thermal expansion coefficient of the base material in which the powder is blended. On the other hand, when the crystallization temperature is equal to or less than the predetermined temperature, a crystalline phase other than the β-quartz solid solution phase, such as a gahnite phase, cristobalite phase, and willemite phase, is less likely to form, which can further lower the thermal expansion coefficient of the base material in which the powder is blended. Even with the same composition, $S_{001}/S_{101}$ can differ depending on the crystallization temperature. For example, a difference of 10°C in heating temperature may cause a large difference in $S_{001}/S_{101}$.

The heating time (crystallization time) is not particularly limited but may be, for example, 1 to 24 hours. When the heating time is equal to or more than the predetermined time, it is possible to sufficiently carry out crystallization to the β-quartz solid solution phase and thereby further lower the thermal expansion coefficient of the base material in which the powder is blended. When the heating time is equal to or less than the predetermined time, it is possible to reduce the cost of producing the powder. Such a crystallization step can provide the powder according to the present embodiment.

The powder obtained by the crystallization step may be an agglomerate of a plurality of particles. The agglomerates themselves may be used as powder, or if necessary, the agglomerates may be crushed and used as powder. The method for crushing the agglomerates is not limited but may be, for example, a method using an agate mortar, ball mill, vibration mill, jet mill, wet jet mill, etc. The crushing may be carried out in a dried condition or in a wet condition while mixing the powder with a liquid, such as water or alcohol. In a case of wet crushing, the powder according to the present embodiment can be obtained by drying after the crushing. The drying method is not limited but may be, for example, heat drying, vacuum drying, freeze drying, supercritical carbon dioxide drying, etc.

In another embodiment, the method for producing the powder can further includes classifying the powder to obtain a desired average particle size and providing surface treatment using a coupling agent. The surface treatment can further increase the amount of the powder blended (filled) into the base material. The coupling agent for surface treatment may include silane coupling agent, titanate coupling agent, aluminate coupling agent, etc.

The powder according to the present embodiment may be mixed with a powder having compositions (e.g., silica, alumina, etc.) different from the powder according to the present embodiment.

The powder according to the present embodiment can be blended in glass or resin base materials while being as it is or being mixed with the above-described powder having the different compositions.

The glass base material may include glasses having compositions of the $PbO-B_2O_3-ZnO$ system, $PbO-B_2O_3-Bi_2O_3$ system, $PbO-V_2O_5-TeO_2$ system, $SiO_2-ZnO-M^1{}_2O$ system ($M^1{}_2O$ is an alkali metal oxide), $SiO_2-B_2O_3-M^1{}_2O$ system, $SiO_2-B_2O_3-M_2O$ system ($M_2O$ is an alkaline earth metal oxide), and the like.

The resin base material is not limited but may be, for example, epoxy resins, silicone resins, phenolic resins, melamine resins, urea resins, unsaturated polyesters, fluororesins, polyamides (polyimides, polyamideimides, polyetherimides, etc.), polybutylene terephthalate, polyesters (polybutylene terephthalate, etc.), polyphenylene sulfide, wholly aromatic polyesters, polysulfones, liquid crystal polymers, polyethersulfones, polycarbonates, modified maleimide resins, ABS (acrylonitrile-butadiene-styrene) resin, AAS (acrylonitrile-acrylic rubber-styrene) resin, AES (acrylonitrile-ethylene-propylene-diene rubber-styrene) resin, etc., or a mixture of these resins.

The amount of powder blended (filled) in the base material is not particularly limited and may be adjusted based on a thermal expansion coefficient after the powder addition, etc., but may be, for example, 30 to 95 vol% or may 40 to 90 vol% of the total amount of the base material after the powder addition.

Since the powder according to the present embodiment has a negative thermal expansion coefficient greater in magnitude, it is possible to lower the thermal expansion coefficient of the base material, etc. in which the powder is blended.

## EXAMPLES

Hereinafter, a more specific description will be given of examples of the present invention, but the present invention is not limited to the examples.

## EXAMPLES 1-5, COMPARATIVE EXAMPLE 1

### Raw Material Powder Preparation Step

Zinc oxide, aluminum oxide, and silicon dioxide as raw materials are prepared at molar ratios represented in Table 1, and these raw materials were mixed with a vibratory mixer (Lab RAM II, low frequency resonant acoustic mixer from Resodyn Corporation). Thirty grams of this mixture was placed into a platinum crucible, heated in an electric furnace, and melt. The furnace temperature of the electric furnace during melting was set at 1600°C, and the holding time at 1600°C was 30 minutes. After melting, the crucible was submerged and quenched in water to obtain a raw material glass. The raw material glass was collected from the platinum crucible and crushed by a stamp mill, and crushed glass having passed a nylon sieve with a mesh aperture of 77 $\mu$m (200 mesh) was obtained as a raw material powder.

### Crystallization Step

The raw material powder was then pulverized and placed in an alumina crucible, and crystallized using an electric furnace under an air atmosphere, with a furnace temperature of the electric furnace during crystallization set to 800°C and the holding time at 800°C set to 24 hours. Thereby, powder samples of Examples 1-5 and Comparative Example 1 were obtained.

The properties of the obtained powder samples were evaluated by the following methods.

### Identification of Crystalline Phases

The crystalline phases in the obtained powder samples were identified by powder X-ray diffraction. Specifically, a parallel-specimen type multipurpose X-ray diffractometer (Ultima IV from Rigaku Corporation) was used under the following condition: an X-ray source of CuK$\alpha$, a tube voltage of 40 kV, tube current of 40 mA, a scan speed of 10°/min, a 2θ scan range of 10° to 80°, a detector of a high-speed 1D X-ray detector D/teX Ultra 2, and an optical system of focusing method. FIG. 3 represents X-ray diffraction patterns of the powder samples of Examples 1-5 and Comparative Example 1. With respect to every sample, a diffraction peak derived from the $\beta$-quartz solid solution containing constituents including ZnO, $Al_2O_3$ and $SiO_2$ was observed.

Ratio $S_{001}/S_{101}$ of Peaks of X-ray Diffraction

The area of each peak was determined by drawing a parabolic background line in the range of 10°≤2θ≤30° using the analysis software Jade 9, then conducting a refinement including the background line, and separating the peaks. The peak was separated in consideration of overlaps between each of the peaks in the ranges of 15°≤2θ≤17° and 24°≤2θ≤27° and a Kα1-derived diffraction line and between each peak and a Kα2-derived diffraction line. In the analysis, the pseudo-voigt function was used as a function of the diffraction peaks.

Thermal Expansion Coefficient of Powder

High-temperature X-ray diffraction (XRD) was used to analyze the thermal expansion coefficient of the main phase of β-quartz solid solution. Here, an angle standard sample (Si) was added to the samples and measured using a focusing optical system. Specifically, about 10 mass% of the angle standard sample (Si, NIST SRM 640c) was added to each sample and then each sample was mixed in a mortar. Thereafter, the sample was placed on a sample plate and was pressed and spread by a glass plate so that the sample surface and the sample plate surface were aligned, and measurements (using a focusing optical system) were carried out at temperatures 100°C to 300°C. The thermal expansion coefficient of the main phase was analyzed by calculating a lattice plane spacing at each temperature based on the obtained diffraction lines (112 plane and 203 plane).

X-ray diffraction measurements were carried out using a specimen-parallel type multipurpose X-ray diffractometer (UltimaIV from Rigaku Corporation) under the following condition: an X-ray source of CuKα, a tube voltage of 40kV, tube current of 40mA, a scan speed of 10°/min, a 20 scan range of 10° to 140°, a detector of high-speed 1D X-ray detector D/teX Ultra 2, an optical system of focusing method, a measurement stage of high-temperature attachment, measurement atmosphere of $N_2$ flow (30 mL/min), set temperatures of 100, 150, 200, 250, and 300°C, a temperature rise rate of 10°C/min, an interval of 5min.

The analysis was carried out as follows. The lattice plane spacings $d_{220_T}$ and $d_{400_T}$ of Si and the lattice plane spacings $d_{112_T}$ and $d_{203_T}$ of the main phase were calculated for the measured results at each temperature T using the analysis software Jade 9.

Analysis Software: Jade 9
Method: Peak Fitting
Analysis temperature: 100, 150, 200, 250, and 300°C
Angle range: 20 = 46 to 50°, 65 to 69.5°
Component: 2 components (Si: 220 plane, main phase: 112 plane) (20=46 to 50°)
2 components (Si: 400 plane, main phase: 203 plane) (20 = 65 to 69.5°)
Background: linear background (20 = 46 to 50°)
parabolic background (20 = 65 to 69.5°)
Peak shape: pseudo-Voigt function

The lattice plane spacings obtained above are considered to include errors due to sample eccentricity because they were measured with a focusing optical system while being heated. Therefore, a sample eccentricity (ΔZ) was estimated using the thermal expansion coefficient of Si (known) and the lattice plane spacings (measured values), and the lattice plane spacings of the main phase ($ZnO-Al_2O_3-SiO_2$) were corrected by the following procedure. Using a lattice plane spacing at 100°C as a reference, a calculated value $d_{220_T\ calculated\ value}$ of a lattice plane spacing at 150°C or more was obtained from a literature value of the thermal expansion coefficient at the Si 220 plane (refer to 3.5 ppm/°C, Int. J. Thermophys, 25, 1, 221-236 (2004)). Next, $d_{220_T\ calculated\ value}$ was substituted into Bragg's equation to calculate a diffraction line angle $2\theta_{220_T\ calculated\ value}$. Then, $\Delta 2\theta_{220_T}$ was then calculated, which is the difference between $2\theta_{220_T\ measured\ value}$ and $2\theta_{220_T\ calculated\ value}$. Next, $\Delta 2\theta_{220_T}$ was substituted into the following equality of eccentricity error (Equation (1)) to calculate a sample eccentricity ΔZ. The goniometer radius R was set to 285 mm.
[Equation 1]

$$\Delta 2\theta_{220_T} = -\frac{2\Delta Z \cdot cos\theta_{220_T\ measured\ value}}{R} \quad (1)$$

$\Delta 2\theta_{112_T}$ was then calculated (equation (2)) by substituting the diffraction line angle $\theta_{112_T\ measured\ value}$ derived from the main phase 112 plane and the sample eccentricity ΔZ into the eccentricity error.
[Equation 2]

$$\Delta 2\theta_{112_T} = -\frac{2\Delta Z \cdot cos\theta_{112_T\ measured\ value}}{R} \quad (2)$$

$2\theta_{112_T\ measured\ value}$ was then corrected by $\Delta 2\theta_{112_T}$ described above to calculate $2\theta_{112_T\ corrected\ value}$. $2\theta_{112_T\ corrected\ value}$ was substituted into Bragg's equation to calculate the corrected lattice plane spacing $d_{112_T\ corrected\ value}$ for the main phase 112 plane. In the same way, the corrected lattice plane spacing $d_{203_T\ corrected\ value}$ for the main phase 203 plane was calculated using the Si 400 diffraction line.

A graph was created where the lattice plane spacing $d_{112_T\ corrected\ value}$ obtained above was plotted to the measurement temperature T, an approximated linear line was drawn in a range from 100 to 300°C, and thereby a gradient $\Delta d_{112_T}/\Delta T$ was obtained. A thermal expansion coefficient $\alpha_{112}$ of the main phase 112 plane was calculated by using the following equation (2).

[Equation 3]

$$\alpha_{112} = \frac{1}{d_{112_100\ corrected\ value}} \cdot \frac{\Delta d_{112_T}}{\Delta T} \quad (3)$$

In the same way, a thermal expansion coefficient $\alpha_{203}$ of the main phase 203 plane was calculated using $d_{203_T\ corrected\ value}$.

Table 2 represents compositions of the raw materials (preparation compositions), the ratios $S_{001}/S_{101}$, and the thermal expansion coefficients $\alpha_{112}$ and $\alpha_{203}$ of the (112) and (203) planes. There was almost no change between the compositions of the raw materials and the compositions of the powders.

TABLE 1

| | Low Material Composition (mol%) | | | $S_{001}/S_{101}$ | Thermal Expansion Coefficient $\alpha_{112}$ [ppm/°C] | Thermal Expansion Coefficient $\alpha_{203}$ [ppm/°C] |
|---|---|---|---|---|---|---|
| | ZnO | $Al_2O_3$ | $SiO_2$ | | | |
| Example 1 | 26 | 16 | 58 | 0.018 | -2.2 | -2.3 |
| Example 2 | 28 | 14 | 58 | 0.030 | -1.4 | -1.8 |
| Example 3 | 30 | 14 | 56 | 0.044 | -1.2 | -1.3 |
| Example 4 | 32 | 14 | 54 | 0.045 | -0.8 | -0.9 |
| Example 5 | 34 | 14 | 52 | 0.051 | -0.4 | -0.8 |
| Comparative Example 1 | 38 | 14 | 48 | 0.073 | 0.3 | -0.2 |

The powder samples of Examples 1-5 were found to have negative thermal expansion coefficients greater in magnitude than that of the powder sample of Comparative Example 1.

FIG. 4 is a plot diagram of the thermal expansion coefficient in the (112) plane direction to the ratio $S_{001}/S_{101}$.FIG. 5 is a plot diagram of the thermal expansion coefficient in the (203) plane direction with respect to the ratio $S_{001}/S_{101}$. A linear relationship of a negative slope was found between the thermal expansion coefficient in each direction and the ratio $S_{001}/S_{101}$.

## Claims

**1.** A powder comprising constituents including ZnO, $Al_2O_3$, and $SiO_2$, wherein:

in a ternary state diagram of ZnO, $Al_2O_3$, and $SiO_2$, the powder has a composition included in a quadrangular area having, as corners, four points (ZnO (mol%), $Al_2O_3$ (mol%), $SiO_2$ (mol%)) = (24,13,63), (19,18,63), (37,12,51), (32,17,51), and

in an X-ray diffraction pattern, a ratio ($S_{001}/S_{101}$) of an area $S_{001}$ of a peak appearing in a range of $15° \leq 2\theta \leq 17°$ to an area $S_{101}$ of a peak appearing in a range of $24° \leq 2\theta \leq 27°$ is in a range from 0.001 to 0.07.

**2.** The powder according to claim 1, comprising a β-quartz solid solution as a crystalline phase at equal to or more than 50 mass% of a total amount of the powder.

**3.** The powder according to claim 1 or 2, wherein:
each of total contents of Li, Na, and K is equal to or less than 500 mass ppm of a total amount of the powder.

**4.** The powder according to claim 1 or 2, wherein an average circularity is equal to or more than 0.6.

FIG. 1

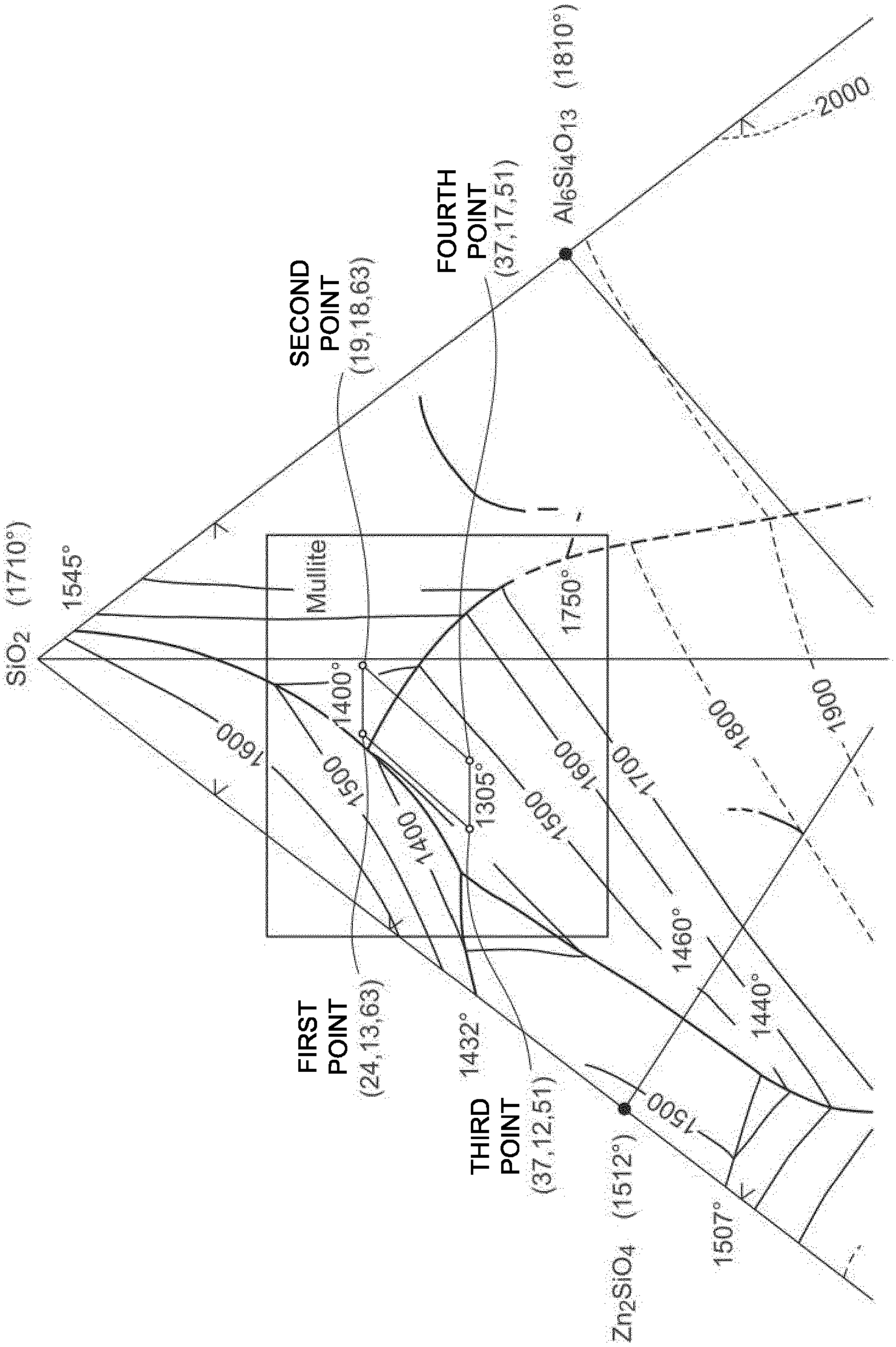
SiO$_2$ (1710°)
1545°
Al$_6$Si$_4$O$_{13}$ (1810°)
2000
SECOND POINT (19,18,63)
FOURTH POINT (37,17,51)
Mullite
1750°
1400°
1600
1500
1400
1305°
1600
1500
1700
1800
1900
1460°
1440°
FIRST POINT (24,13,63)
1432°
THIRD POINT (37,12,51)
1500
Zn$_2$SiO$_4$ (1512°)
1507°

FIG. 2

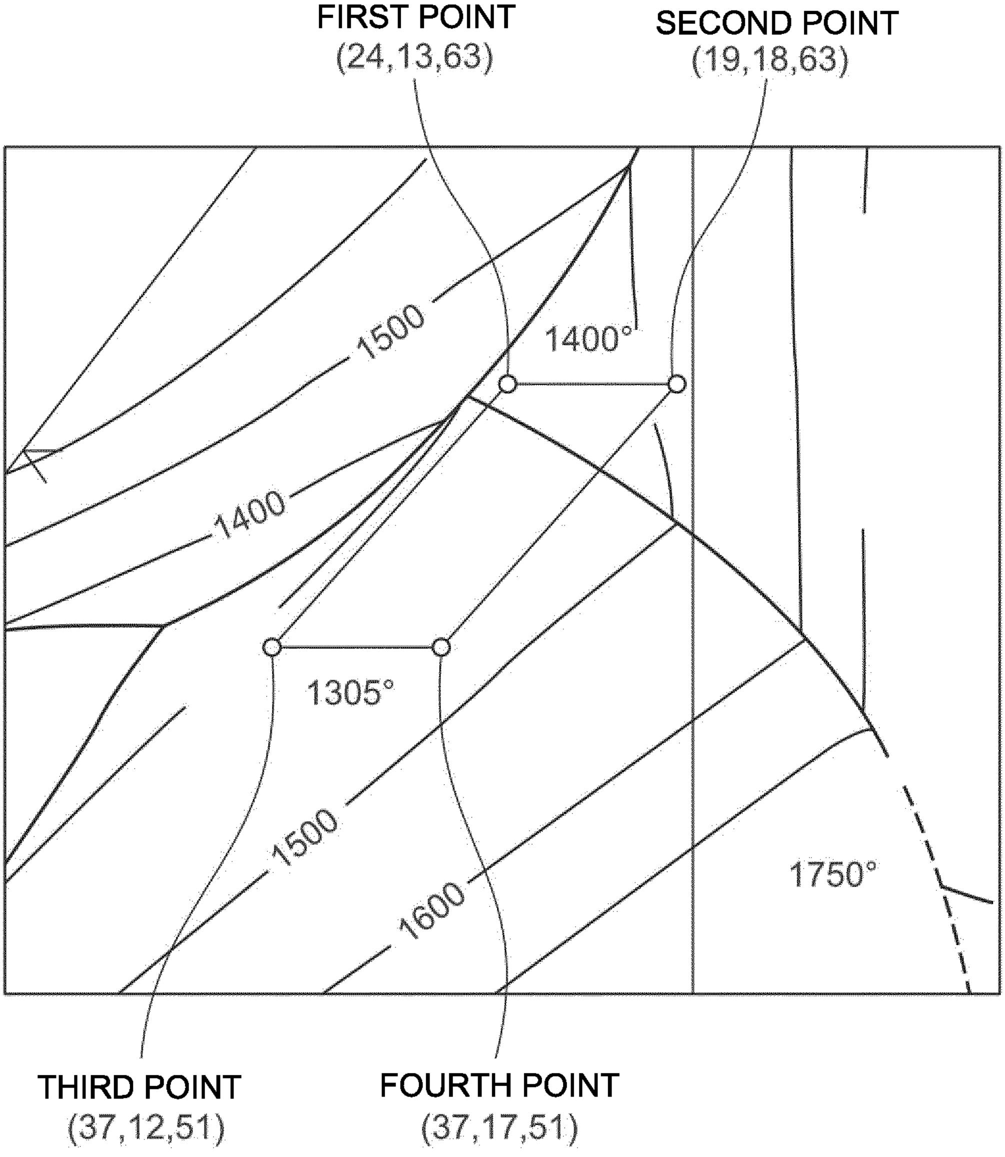
FIRST POINT
(24,13,63)
SECOND POINT
(19,18,63)
1500
1400°
1400
1305°
1500
1600
1750°
THIRD POINT
(37,12,51)
FOURTH POINT
(37,17,51)

FIG. 3

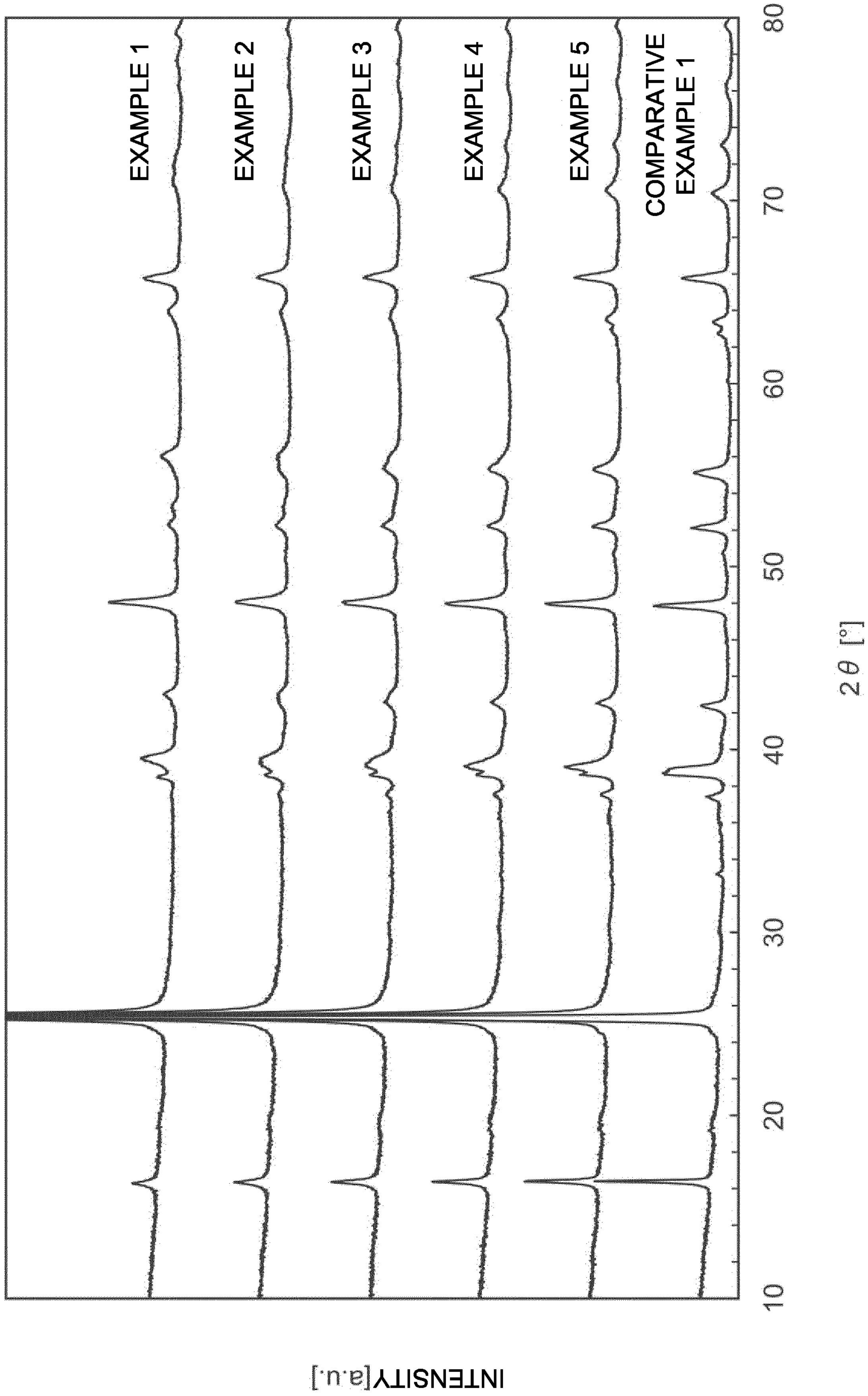
EXAMPLE 1
EXAMPLE 2
EXAMPLE 3
EXAMPLE 4
EXAMPLE 5
COMPARATIVE EXAMPLE 1
INTENSITY[a.u.]
2θ [°]
10
20
30
40
50
60
70
80

FIG. 4

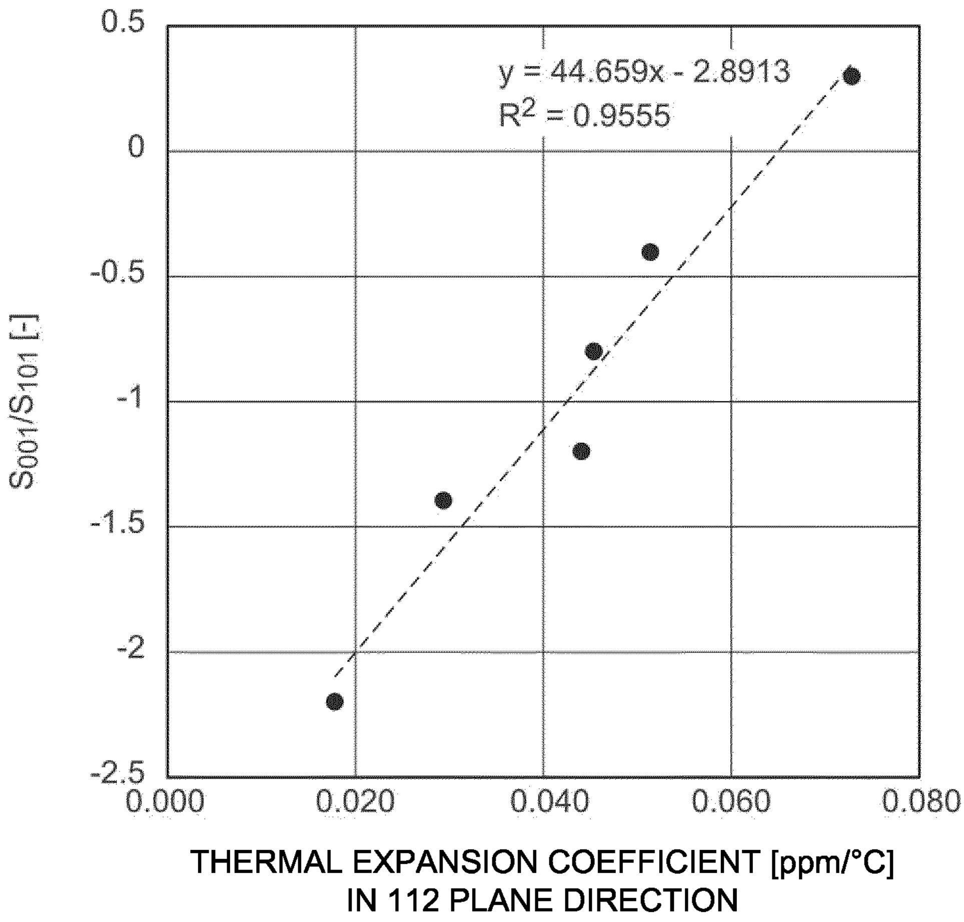
y = 44.659x - 2.8913
$R^2$ = 0.9555
0.5
0
-0.5
-1
-1.5
-2
-2.5
$S_{001}/S_{101}$ [-]
0.000
0.020
0.040
0.060
0.080
THERMAL EXPANSION COEFFICIENT [ppm/°C]
IN 112 PLANE DIRECTION

FIG. 5

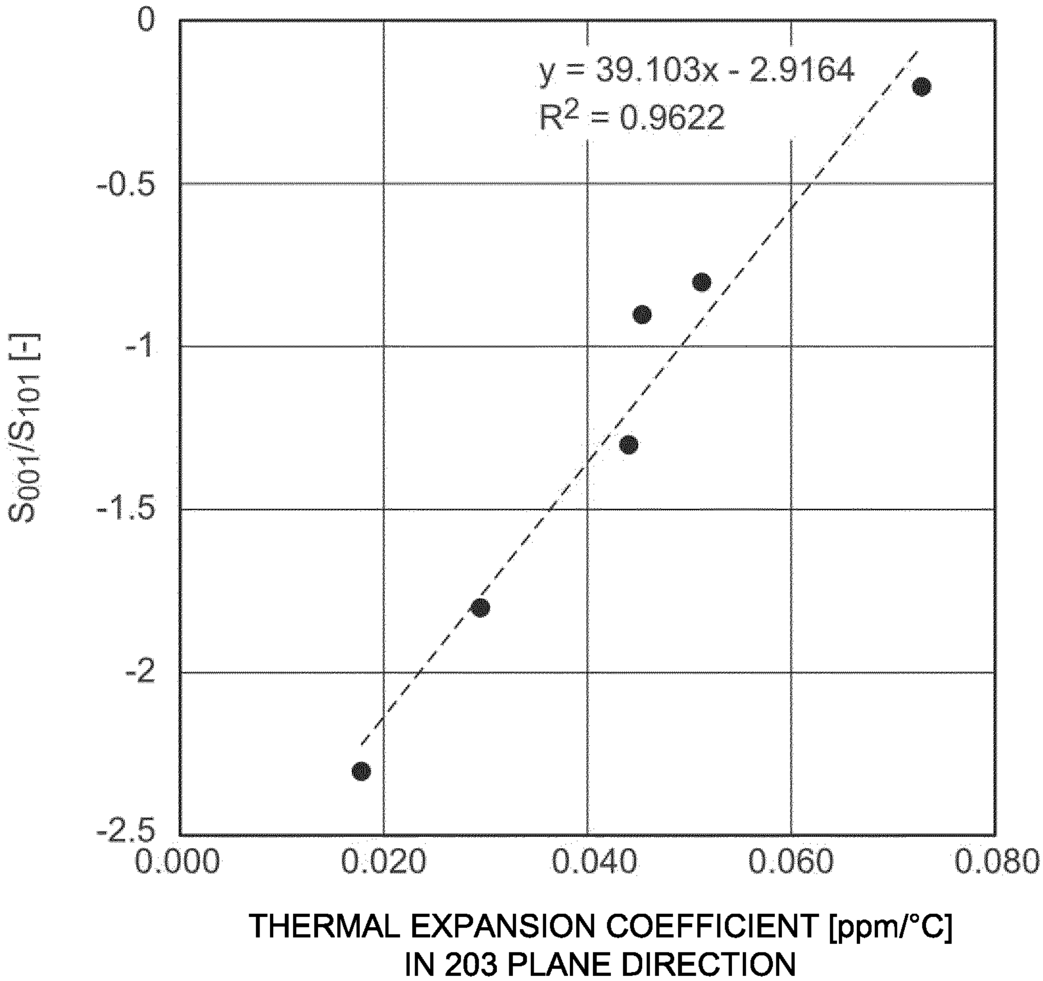

y = 39.103x - 2.9164
R2 = 0.9622
0
-0.5
-1
-1.5
-2
-2.5
0.000
0.020
0.040
0.060
0.080
S001/S101 [-]
THERMAL EXPANSION COEFFICIENT [ppm/°C]
IN 203 PLANE DIRECTION

## INTERNATIONAL SEARCH REPORT

International application No.
**PCT/JP2022/024858**

**A. CLASSIFICATION OF SUBJECT MATTER**

***C03C 12/00***(2006.01)i; ***C03C 10/14***(2006.01)i
FI: C03C12/00; C03C10/14

According to International Patent Classification (IPC) or to both national classification and IPC

**B. FIELDS SEARCHED**

Minimum documentation searched (classification system followed by classification symbols)

C03C1/00-14/00; C04B35/00-35/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| X | 横石 章司, 斎藤 肇, ZnO-Al2O3-SiO2系ガラス（ZnO/Al2O3>1) からのβ-石英固溶体の析出 (ZnO-Al2O3-SiO2系ガラスの結晶化に関する研究、第4 報), 窯業協会誌, 1980, 88 [12], pp. 733-740 (YOKOISHI, Shoji, SAITO, Hajime. Precipitation of β-quartz Solid Solutions from ZnO-Al2O3-SiO2 glasses (ZnO/Al2O3>1). Studies on the Crystallization of (ZnO-Al2O3-SiO2, Glasses, No. 4). Journal of the Ceramic Society of Japan.) 2. Experiment Methodology, 3. Results, table 1, no. 1, fig. 3 (B) | 1-4 |
| X | JP 2-208256 A (DENKI KAGAKU KOGYO K.K.) 17 August 1990 (1990-08-17) claims, examples 1-3, table 1 | 1-4 |
| A | WO 2019/177112 A1 (DENKA CO., LTD.) 19 September 2019 (2019-09-19) entire text, all drawings | 1-4 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024858**

| Patent document cited in search report | Publication date (day/month/year) | Patent family member(s) | Publication date (day/month/year) |
|---|---|---|---|
| JP 2-208256 A | 17 August 1990 | (Family: none) | |
| WO 2019/177112 A1 | 19 September 2019 | US 2020/0399169 A1<br>entire text, all drawings<br>EP 3766852 A1<br>CN 111630011 A<br>KR 10-2020-0133325 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019177112 A


### Non-patent literature cited in the description


- *Int. J. Thermophys,* 2004, vol. 25 (1), 221-236